# EUROPÄISCHE PATENTSCHRIFT

(11) **EP 4 031 437 B1**
(45) Veröffentlichungstag und Bekanntmachung des Hinweises auf die Patenterteilung: **21.01.2026**
(21) Anmeldenummer: 20775252.8
(22) Anmeldetag: 17.09.2020
(51) Int. Cl.: B62B 5/00, B62B 9/00, G01L 25/00, B60L 15/20, B62B 7/06, B62B 5/04

(54) **KINDERWAGEN ODER KINDERWAGENGESTELL MIT EINEM MOTOR UND EINER STEUEREINHEIT ZUM UNTERSTÜTZEN DES ANTRIEBS MIT KRAFTSENSORKALIBRIERUNG, VERFAHREN ZUM STEUERN UND COMPUTERLESBARES SPEICHERMEDIUM**
STROLLER OR STROLLER FRAME WITH A MOTOR AND A CONTROL UNIT TO ASSIST PROPULSION WITH CALIBRATION OF A FORCE SENSOR, METHOD TO CONTROL AND COMPUTER READABLE STORAGE MEDIUM
POUSSETTE OU CADRE DE POUSSETTE AVEC UN MOTEUR ET UNE UNITÉ DE CONTRÔLE POUR ASSISTER LA PROPULSION AVEC ÉTALONNAGE D'UN CAPTEUR DE FORCE, PROCÉDÉ DE CONTRÔLE ET SUPPORT DE STOCKAGE LISIBLE PAR ORDINATEUR

(30) Priorität: 18.09.2019 DE 202019105162 U
(43) Veröffentlichungstag der Anmeldung: 27.07.2022
(73) Patentinhaber: CYBEX GmbH, 95448 Bayreuth (DE)
(72) Erfinder: SPOUR, Jiri, 25241 Zlatniky-Hodkovice (CZ)
(74) Vertreter: Meissner Bolte Partnerschaft mbB
(86) Internationale Anmeldenummer: PCT/EP2020/075936
(87) Internationale Veröffentlichungsnummer: WO 2021/053054

(56) Entgegenhaltungen:
- EP-A1- 1 701 146
- EP-A1- 3 444 142
- CN-A- 108 536 184
- DE-A1- 102010 039 852
- DE-A1- 102013 224 885
- DE-U1- 202017 104 166
- JP-A- H0 843 220
- US-A- 5 483 820
- US-A1- 2017 120 450

## Beschreibung

Die Erfindung betrifft ein Kinderwagengestell, einen Kinderwagen und ein computerlesbares Speichermedium.

Motorisierte Kinderwägen sind grundsätzlich bekannt. Diese können so konfiguriert sein, dass sie ausschließlich durch Motorkraft bewegt werden können. Weiterhin ist es grundsätzlich bekannt, Kinderwägen mit Motorunterstützung auszustatten, die die Antriebskraft einer den Kinderwagen bedienenden Person unterstützt, jedoch keine Unterstützung leistet, wenn durch den Bedienenden keine Kraft ausgeübt wird.

Aus DE 20 2017 104 166 U1 ist ein Kinderwagengestell sowie ein entsprechender Kinderwagen mit einer Kraft-Sensoreinrichtung zur Messung des Betrags oder der Richtung einer Kraft bzw. Kraftkomponente bekannt. Dadurch ist es möglich, dass eine Steuerung der Motorunterstützung des Kinderwagens basierend auf einem Output der Sensoreinrichtung erfolgen kann. Die Kraft-Sensoreinrichtung kann am Handgriff des Schiebers vorgesehen sein. Schiebt oder zieht also ein Anwender den Kinderwagen, misst die Kraft-Sensoreinrichtung den Betrag oder die Richtung der aufgewendeten Kraft. Durch eine gekoppelte Steuerungseinrichtung wird dann der über die Kraft-Sensoreinrichtung gemessene Output zur Ansteuerung mindestens eines Antriebsmotors genutzt. Dieser dient dazu, den Anwender, je nach aufgewendeter Kraft, beim Schieben zu unterstützen.

Die EP 3 444 142 A1 offenbart eine Kalibrierungsvorrichtung umfassend einen Krafterfassungssensor, der so konfiguriert ist, dass er eine auf das sich elektrisch bewegende Fahrzeug ausgeübte Kraft erfasst; und eine Steuerung, die so konfiguriert ist, dass sie einen Erfassungswert des Krafterfassungssensors während eines Ladevorgangs einer in dem sich elektrisch bewegenden Fahrzeug enthaltenen Batterie erfasst und einen Nullpunkt des Krafterfassungssensors auf der Grundlage der während des Ladens der Batterie erfassten Erfassungswerte festlegt.

Kraft-Sensoreinrichtungen sind grundsätzlich bekannt. Derartige Kraft-Sensoreinrichtungen, insbesondere Dehnungsmessstreifen, können beispielsweise auf der Änderung des Widerstandes durch Längen- und/oder Querschnittsänderung basieren. Unter Kraft-Sensoreinrichtungen sind auch Einrichtungen zu verstehen, die indirekt, beispielsweise durch das Erfassen eines Drehmoments, eine Indikation für die aufgebrachte Kraft liefern. Wird ein Dehnungsmessstreifen (DMS) gedehnt, nimmt sein Widerstand zu. Wird er gestaucht, so nimmt sein Widerstand ab. Aufgrund der hohen Empfindlichkeit von Dehnungsmessstreifen gibt es Störgrößen, die das Messergebnis beeinflussen können. Typische Störgrößen sind beispielsweise die Temperatur, das Kriechen und Feuchtigkeit. Werden derartige Kraft-Sensoreinrichtungen in Kinderwägen eingesetzt, können diese Störgrößen zu einem verfälschten Output und somit zu einer verschlechterten Antriebsunterstützung führen. Dies kann ein Sicherheitsrisiko für ein sich im Kinderwagen befindliches Kind darstellen. Im Allgemeinen können bei Kinderwägen vergleichsweise kleine Abweichungen durchaus toleriert werden, größere Abweichungen, hingegen sind problematisch.

Aus diesem Grund ist es Aufgabe der Erfindung, einen Kinderwagen bzw. Kinderwagengestell mit Motorunterstützung vorzuschlagen, bei dem eine möglichst einfache, sichere und benutzerfreundliche Anwendung ermöglicht ist. Insbesondere sollen (störende) Unterbrechungen für die Verwendung des Kinderwagens bzw. Kinderwagengestells bzw. dessen Motorunterstützung reduziert werden oder unterbleiben.

Diese Aufgabe wird durch die Merkmale der unabhängigen Ansprüche gelöst. Bevorzugte Ausführungen ergeben sich aus den abhängigen Ansprüchen.

Offenbart wird ein Kinderwagen oder ein Kinderwagengestell, umfassend mindestens einen Motor, insbesondere Elektromotor, zum (insbesondere unterstützenden) Antreiben des Kinderwagens bzw. Kinderwagengestells, mindestens einen Schieber zum Schieben des Kinderwagengestells bzw. Kinderwagens, mindestens eine Kraft-Sensoreinrichtung zum Erfassen einer kraftbezogenen Größe, insbesondere einer Kraft und/oder einer Kraftkomponente, die auf den Schieber einwirkt, und/oder einer aus dieser Kraft bzw. Kraftkomponente abgeleiteten Größe, beispielsweise eines Drehmomentes und/oder einer zeitlichen Änderung der Kraft bzw. Kraftkomponente, und mindestens eine Steuereinheit, die konfiguriert ist, eine Kalibrierung der kraftbezogenen Größe (also eine Kalibrierung der Kraft-Sensoreinrichtung in Bezug auf die kraftbezogene Größe) zu initiieren (und vorzugsweise auch durchzuführen). Durch eine derartige Kalibrierung können insbesondere vergleichsweise große Abweichungen (aufgrund sich ändernder, insbesondere äußerer, Bedingungen) kompensiert oder zumindest reduziert werden. Dadurch wird die Ansteuerung und damit die Verwendung des Kinderwagens bzw. Kinderwagengestells verbessert.

Besonders bevorzugt ist die Steuereinheit konfiguriert, eine Kalibrierung der Kraft-Sensoreinrichtung (in Bezug auf die kraftbezogene Größe) in Abhängigkeit eines Ergebnisses mindestens einer Erfassung der kraftbezogenen Größe, insbesondere in Abhängigkeit eines Ergebnisses einer Vielzahl, von vorzugsweise mindestens 3 (weiter vorzugsweise mindestens 5, noch weiter vorzugsweise mindestens 8) und/oder höchstens 100 (oder höchstens 50 oder höchstens 30), insbesondere (vorzugsweise unmittelbar) aufeinanderfolgenden, Erfassungen der kraftbezogenen Größe zu initiieren. Dadurch kann auf einfache Art und Weise erreicht werden, dass die Bedienerfreundlichkeit des Kinderwagens bzw. Kinderwagengestells verbessert wird. Dadurch, dass die Kalibrierung (erst) dann initiiert bzw. gestartet wird, wenn ein Ergebnis in Bezug auf die Erfassung der kraftbezogenen Größe vorliegt, kann beispielsweise die Wahrscheinlichkeit reduziert werden, dass eine Kalibrierung dann durchgeführt wird, wenn dies (in Anbetracht der aktuellen Verwendung des Kinderwagens bzw. Kinderwagengestells) für den Benutzer störend wäre. Insbesondere erfolgt nicht (zwingend) eine Kalibrierung, wenn (sobald) die Motorunterstützung angeschaltet wird. Eine derartige, (zwingend) unmittelbar nach dem Start der Motorunterstützung ablaufende Kalibrierung, hat bzw. hätte zur Folge, dass eine bestimmte Zeit verstreicht, bis der Benutzer dann überhaupt den Kinderwagen bzw. das Kinderwagengestell (mit Motorunterstützung) verwenden kann.

Beispielsweise ist es nicht zwingend nötig, dass der Benutzer nach dem Start der Motorunterstützung erst den Kinderwagen bzw. das Kinderwagengestell stehen lässt, damit eine Kalibrierung durchgeführt werden kann, bevor der Kinderwagen einschließlich Motorunterstützung dann tatsächlich genutzt werden kann. Generell muss also nicht zwingend gewartet werden, bis die Kraft-Sensoreinrichtung kalibriert ist, bevor mit der Benutzung des Kinderwagens bzw. Kinderwagengestells begonnen werden kann. Eine entsprechende Pause (ohne bzw. mit nur geringer Krafteinwirkung auf die Kraft-Sensoreinrichtung) ist nicht (zwingend) notwendig. Gerade auch Situationen, in denen ein Anwender den (motorisierten) Kinderwagen bzw. das Kinderwagengestell zunächst ohne Motorunterstützung verwendet, dann aber (beispielsweise aufgrund einer Steigung) durch den Motor unterstützt werden möchte, muss dieser Anwender nun nicht (zwingend) nach dem Anschalten des Motors erst auf eine Kalibrierung der Kraft-Sensoreinrichtung warten. Insgesamt kann eine einfache, sichere, benutzerfreundliche bzw. zeitsparende Anwendung eines motorisierten Kinderwagens erreicht werden.

Vorzugsweise ist die Steuereinheit konfiguriert, eine Kalibrierung der Kraft-Sensoreinrichtung (in Bezug auf die kraftbezogene Größe) (nur) dann zu initiieren, wenn (falls und/oder sobald) das Ergebnis (der Erfassung(en) der kraftbezogenen Größe) indiziert, dass kein Schieben durch eine Person erfolgt. Dadurch kann eine besonders benutzerfreundliche bzw. zeitsparende Anwendung ermöglicht werden.

Insofern im vorliegenden Zusammenhang davon die Rede ist, dass eine Initiierung stattfindet, sobald eine gewisse Bedingung erfüllt ist, ist damit insbesondere gemeint, dass die Kalibrierung spätestens nach Ablauf von 1 Minute, vorzugsweise höchstens 10 Sekunden, weiter vorzugsweise höchstens 1 Sekunde, noch weiter vorzugsweise höchstens 0,5 Sekunden eingeleitet bzw. initiiert (und vorzugsweise auch, insbesondere unmittelbar, im Anschluss daran durchgeführt) wird.

Grundsätzlich ist es bevorzugt, wenn die Kalibrierung unmittelbar nach Eintritt der jeweils vorgegebenen Bedingung erfolgt. Es ist jedoch auch denkbar, dass das Ergebnis der Erfassung, insbesondere das Ergebnis einer Vielzahl von Erfassungen zunächst gespeichert wird und dann ggf. später mit Hilfe dieses Ergebnisses (beispielsweise durch Bildung eines Mittelwertes einer Vielzahl von Erfassungen) eine Kalibrierung (beispielsweise Nullpunktbestimmung) erfolgt. Bei dem Mittelwert handelt es sich vorzugsweise um ein arithmetisches Mittel oder ein geometrisches Mittel oder ein harmonisches Mittel oder ein gewichtetes oder getrimmtes Mittel oder einen anderen geeigneten Mittelwert.

Unter einer Kalibrierung ist insbesondere zumindest eine Referenzpunktbestimmung, vorzugsweise Nullpunktbestimmung zu verstehen, bei der vorzugsweise ein kraftloser Zustand vorliegt (also insbesondere kein Schieben eines Anwenders erfolgt). Ggf. kann der Zusammenhang zwischen tatsächlich anliegender Kraft und gemessener Kraft (z. B. auf einfache, dem Fachmann geläufige Art und Weise) durch Messen ermittelt werden.

Vorzugsweise ist die Steuereinheit konfiguriert, eine Kalibrierung der Kraft-Sensoreinrichtung (in Bezug auf die kraftbezogene Größe) (nur) dann zu initiieren, wenn (falls und/oder sobald) die Vielzahl von Erfassungen der kraftbezogenen Größe innerhalb eines vorbestimmten Werte-Intervalls (bzw. eines Werte-Intervalls vorbestimmter Breite), von vorzugsweise einer Breite von mindestens 0,1 N, weiter vorzugsweise mindestens 0,3 N, weiter vorzugsweise 0,5 N und/oder höchstens 10 N, vorzugsweise höchstens 5 N, weiter vorzugsweise höchstens 2 N, für die kraftbezogene Größe liegen. Wenn es sich in diesem Zusammenhang bei der kraftbezogenen Größe nicht unmittelbar um eine Kraft bzw. Kraftkomponente handelt, sollen die hier angegebenen Werte in Newton derjenigen Kraft entsprechen, die der eigentlich (ggf. unmittelbar) erfassten Größe, wie beispielsweise dem Drehmoment, entspricht. Dies soll auch nachfolgend immer dann gelten, wenn Werte in Newton angegeben werden. Wenn beispielsweise (unmittelbar) eine Erfassung eines Drehmomentes erfolgt, kann daraus eine am Schieber anliegende Kraft abgeleitet werden, die sich in diesem Fall daraus ergibt, dass der Hebelweg (in Meter) bei einem vorliegenden Kinderwagen bzw. Kinderwagengestell bekannt ist bzw. definiert ist.

Alternativ oder zusätzlich ist die Steuereinrichtung konfiguriert, eine Kalibrierung der Kraft-Sensoreinrichtung (in Bezug auf die kraftbezogene Größe) (nur) dann zu initiieren, wenn (falls und/oder sobald) eine statistische Kenngröße, insbesondere ein statistisches Streumaß, vorzugsweise eine Varianz, der Vielzahl der Erfassungen innerhalb eines vorbestimmten Wertes für die statistische Kenngröße, von vorzugsweise mindestens 0,1 N, weiter vorzugsweise mindestens 0,3 N, noch weiter vorzugsweise mindestens 0,5 N und/oder höchstens 10 N, vorzugsweise höchstens 5 N, noch weiter vorzugsweise höchstens 2 N, liegt. Dadurch kann auf einfache Art und Weise die Bedienerfreundlichkeit verbessert werden.

Unter einem statistischen Streumaß ist insbesondere ein Maß der Streuung der erfassten Messwerte zu verstehen. Liegt die statistische Kenngröße bzw. das statistische Streumaß außerhalb eines vorbestimmten Intervalls bzw. über einem vorbestimmten Wert, erfolgt vorzugsweise keine Kalibrierung.

Zur Bestimmung einer Geschwindigkeit des Kinderwagens bzw. einer Drehgeschwindigkeit mindestens eines Rades kann ein entsprechender Geschwindigkeits-Sensor vorgesehen sein. Dieser ist vorzugsweise konfiguriert zumindest zu erfassen, ob der Kinderwagen bzw. das mindestens eine Rad in Ruhe ist oder sich bewegt, insbesondere zwei, weiter vorzugswiese mindestens fünf verschiedene Werte (größer Null) zu erfassen.

Ausführungsgemäß ist die Steuereinheit konfiguriert, eine Kalibrierung der Kraft-Sensoreinrichtung (in Bezug auf die kraftbezogene Größe) (nur) dann zu initiieren, wenn (falls und/oder sobald) eine vorbestimmte Geschwindigkeit des Kinderwagengestells, insbesondere eine vorbestimmte Drehgeschwindigkeit mindestens eines Rades, eingenommen oder unterschritten wird, vorzugsweise (nur) dann zu initiieren, wenn (falls und/oder sobald) mindestens ein Rad in Ruhe ist. Die vorbestimmte Geschwindigkeit kann ≤ 5 cm/s, vorzugsweise ≤ 1 cm/s, ggf. (zumindest ungefähr) 0 cm/s sein.

Ausführungsgemäß ist die Steuereinheit konfiguriert, eine Kalibrierung der Kraft-Sensoreinrichtung (in Bezug auf die kraftbezogene Größe) (nur) dann zu initiieren, wenn ein erfasster Wert der kraftbezogenen Größe auf oder unterhalb eines vorbestimmten Wertes liegt, wobei der vorbestimmte Wert vorzugsweise bei mindestens 1 N, ggf. mindestens 2 N oder mindestens 5 N und/oder höchstens 10 N) liegt. Dadurch wird ggf. das Risiko einer Fehl-Kalibrierung reduziert, beispielsweise wenn eine statische Kraft wirkt (z. B. eine Jacke auf dem Schieber aufliegt). Insbesondere kann dadurch die Gefahr reduziert werden, dass ein Zustand, bei dem eine statische Kraft anliegt (wie sie üblicherweise beim Schieben, bei dem es sich um einen hochdynamischen Vorgang handelt, nicht vorliegt) mit einem Fall verwechselt wird, bei dem überhaupt keine Kraft am Schieber anliegt.

Vorzugsweise ist die Steuereinheit konfiguriert, eine Motorunterstützung zu unterbinden (also insbesondere ein Starten desselben erst gar nicht zuzulassen) oder (eine bereits erfolgende) Motorunterstützung zu stoppen und/oder eine Fehleranzeige zu veranlassen (beispielsweise mittels einer optischen und/oder akustischen Anzeige, beispielsweise einem Ton, vorzugsweise Piepton bzw. einer Leuchtanzeige, z. B. LED oder Display-Anzeige), wenn (falls und/oder sobald) ein erfasster Wert der kraftbezogenen Größe auf oder oberhalb eines vorbestimmten Wertes liegt, wobei der vorbestimmte Wert vorzugsweise mindestens 10 N, weiter vorzugsweise mindestens 20 N, noch weiter vorzugsweise mindestens 25 N und/oder höchstens 100 N, vorzugsweise höchstens 50 N, weiter vorzugsweise höchstens 40 N beträgt. Besonders bevorzugt erfolgt in einem solchen Fall weder eine Kalibrierung noch eine Motorunterstützung. Dadurch kann erreicht werden, dass eine (grobe) Fehlfunktion der Kraft-Sensoreinrichtung möglichst wenige oder keine schädlichen Konsequenzen hat, insbesondere nicht dazu führt, dass die Motorunterstützung entweder nicht nach den Wünschen des Anwenders erfolgt oder sogar zu gefährlichen Situationen führt. Besonders bevorzugt erfolgt in einem solchen Fall gar keine Motorunterstützung. Insbesondere wird diese Bedingung von der Steuereinheit geprüft, bevor weitere Bedingungen (im Hinblick auf die Initiierung einer Kalibierung) geprüft werden (in einem ersten Prüfungsschritt).

Die Kraft-Sensoreinrichtung und/oder die Steuereinheit kann/können konfiguriert sein, eine Erfassung der kraftbezogenen Größe, zumindest bis zu einer Initiierung der Kalibrierung, in einer vorbestimmten Frequenz von vorzugsweise mindestens 2 Hz, weiter vorzugsweise mindestens 5 Hz, weiter vorzugsweise mindestens 8 Hz und/oder höchstens 100 Hz, vorzugsweise höchstens 50 Hz, weiter vorzugsweise höchstens 30 Hz, weiter vorzugsweise höchstens 20 Hz, durchzuführen. Durch eine derartige Erfassungsfrequenz kann auf effektive Art und Weise eine vergleichsweise genaue Kenntnis über die aktuelle Benutzung des Kinderwagens bzw. Kinderwagengestells erzielt werden.

Die Vielzahl der Erfassungen beträgt vorzugsweise mindestens 5, weiter vorzugsweise mindestens 8 und/oder höchstens 500, vorzugsweise höchstens 100. Alternativ oder zusätzlich ist die Vielzahl der Fassungen mindestens 0,3-mal, vorzugsweise mindestens 0,5-mal und/oder höchstens 50-mal, vorzugsweise höchstens 10-mal, weiter vorzugsweise höchstens 5-mal, weiter vorzugsweise höchstens 2-mal, so groß wie eine (die) Frequenz der Erfassung der kraftbezogenen Größe in Hz. Dadurch kann auf effektive Art und Weise ein vergleichsweise aussagekräftiges Ergebnis abgeleitet werden.

Die Steuereinheit ist vorzugsweise dafür ausgebildet, die Kalibrierung durchzuführen, vorzugsweise einen neuen Referenzpunkt (insbesondere Nullpunkt) für die kraftbezogene Größe zu bestimmen, insbesondere in Abhängigkeit von dem (den) für die Initiierung berücksichtigen Wert(en) der kraftbezogenen Größe, wobei besonders bevorzugt ein Mittelwert einer Vielzahl von für die Initiierung berücksichtigen Werte der kraftbezogenen Größe als neuer Referenzpunkt (Nullpunkt) festgelegt wird. Alternativ kann auch eine weitere Steuereinheit (ggf. auch eine externe Steuereinheit) die eigentliche Kalibrierung durchführen. Bei dem Mittelwert handelt es sich vorzugsweise um ein arithmetisches Mittel oder ein geometrisches Mittel oder ein harmonisches Mittel oder ein gewichtetes oder getrimmtes Mittel oder einen anderen geeigneten Mittelwert.

Die Kalibrierung kann zumindest teilweise, ggf. vollständig, mit denjenigen Werten erfolgen, die auch bei der Initiierung der Kalibrierung herangezogen wurden. Alternativ oder zusätzlich können jedoch auch weitere (ggf. erst zu messende) Werte für die Kalibrierung herangezogen werden.

Der Kinderwagen bzw. das Kinderwagengestell bzw. dessen Steuereinheit, umfasst vorzugsweise mindestens eine (elektronische) Speichereinheit, insbesondere zum Speichern einer (bereits erfolgten) Kalibrierung. Die Speichereinrichtung kann einen (Mikro-)Chip umfassen.

Die Steuereinheit ist vorzugsweise dazu ausgebildet, den Motor bis zu einer neuen Kalibrierung auf Grundlage einer gespeicherten Kalibrierung anzusteuern. Dies gilt insbesondere auch bei zwischenzeitlichem Ausschalten einzelner oder aller Komponenten des Kinderwagens bzw. des Kinderwagengestells, beispielsweise der Kraft-Sensoreinheit und/oder der Steuereinrichtung

Insbesondere kann (bewusst) ein Kompromiss zwischen einer Erfassungsgenauigkeit (zu einem bestimmten Zeitpunkt) und der Benutzerfreundlichkeit (zum entsprechenden Zeitpunkt) gewählt werden. Insbesondere wird vorzugsweise bewusst in Kauf genommen, dass eine Erfassung zumindest über einen gewissen Zeitraum weniger exakt ist (da auf eine "ältere" Kalibrierung zurückgegriffen wird), dafür der Benutzer im Hinblick auf die konkrete Benutzung (zeitlich) nicht eingeschränkt ist, insbesondere keine Pause abwarten muss. Die Kalibrierung wird vorzugsweise dann nachgeholt, wenn der Benutzer den Kinderwagen bzw. das Kinderwagengestell ohnehin nicht aktiv benutzt (beispielsweise an einer Ampel wartet).

In Ausführungsformen ist die Steuereinheit dazu ausgebildet, insbesondere (unmittelbar) nach Inbetriebnahme des Motors (und ggf. anschließender erstmaliger Kalibrierung) in vorbestimmten Abständen, von vorzugsweise mindestens 5 min, weiter vorzugsweise mindestens 10 min und/oder höchstens 12 h, vorzugsweise höchstens 2 h, zu überprüfen, ob eine Initiierung der Kalibrierung möglich ist (also ob die übrigen dafür notwendigen Bedingungen eingehalten werden). Wenn eine Initiierung der Kalibrierung möglich ist, veranlasst die Steuereinheit vorzugsweise auch eine Durchführung der Kalibrierung (bzw. ist entsprechend konfiguriert). Alternativ kann die Steuereinheit ausgebildet sein, nach erfolgter Initiierung der Kalibrierung (insbesondere bis zu einem Abschalten des Motors) keine weitere Kalibrierung mehr zu initiieren.

In Ausführungsformen ist die Steuereinheit dazu ausgebildet, insbesondere (unmittelbar) nach Inbetriebnahme des Motors (und ggf. anschließender erstmaliger Kalibrierung) zu überprüfen, ob eine Initiierung der Kalibrierung möglich ist, wenn (falls und/oder sobald) eine vorbestimmte, insbesondere von außen vorgegebene, Bedingung, wie beispielsweise eine Temperaturänderung gegenüber einer Temperatur zum Zeitpunkt einer letztmaligen Kalibrierung und/oder eine (relative) Feuchteänderung gegenüber einer (relativen) Feuchte zum Zeitpunkt einer letztmaligen Kalibrierung und/oder eine sonstige Änderung von Umgebungsbedingungen vorliegt. Wenn eine Initiierung der Kalibrierung möglich ist, veranlasst die Steuereinheit vorzugsweise auch eine Durchführung der Kalibrierung (bzw. ist entsprechend konfiguriert). Insbesondere kann also dann eine nochmalige Kalibrierung erfolgen, wenn sich Umgebungsbedingungen entsprechend (stark) geändert haben, was eine effektive Nutzung der dazu notwendigen Ressourcen (Rechenleistung bzw. elektronischer Speicher und/oder elektrischer Speicher für einen Betriebsstrom) bedeutet.

Die obengenannte Aufgabe wird weiterhin vorzugsweise gelöst durch ein computerlesbares Speichermedium gemäß Anspruch 12, welches Instruktionen enthält, die mindestens einen Prozessor dazu veranlassen, ein Verfahren zum Steuern eines Kinderwagens (insbesondere der obigen Art), umfassend mindestens einen Motor, insbesondere Elektromotor, zum unterstützenden Antreiben des Kinderwagengestells und mindestens einen Schieber zum Schieben des Kinderwagengestells, zu implementieren, wenn die Instruktionen durch einen Prozessor ausgeführt werden, wobei bei dem Verfahren mindestens eine kraftbezogene Größe, insbesondere eine Kraft und/oder eine Kraftkomponente (die auf dem Schieber einwirkt, und/oder eine aus dieser Kraft bzw. Kraftkomponente abgeleitete Größe, beispielsweise ein Drehmoment und/oder eine zeitliche Änderung der Kraft bzw. Kraftkomponente erfasst wird, wobei eine Kalibrierung der Kraft-Sensoreinrichtung (in Bezug auf die kraftbezogene Größe) in Abhängigkeit eines Ergebnisses mindestens eine Erfassung der kraftbezogenen Größe, insbesondere in Abhängigkeit des Ergebnis einer Vielzahl, von vorzugsweise mindestens 3, insbesondere (unmittelbar) aufeinanderfolgenden, Erfassungen der kraftbezogenen Größe initiiert wird.

Weitere Verfahrensschritte, die entsprechend implementiert sein können, lassen sich aus den obigen und nachfolgenden Ausführungen sowie den beiliegenden Ansprüchen zum Kinderwagengestell bzw. Kinderwagen ableiten. Dort angegebene Konfigurationen bzw. Funktionalitäten können als konkrete Verfahrensschritte realisiert sein.

Die obengenannte Aufgabe wird weiterhin insbesondere gelöst durch ein Verfahren gemäß Anspruch 13 zum Steuern eines Kinderwagens, vorzugsweise der obigen Art, umfassend mindestens einen Motor, insbesondere Elektromotor, zum unterstützenden Antreiben des Kinderwagens und mindestens einen Schieber zum Schieben des Kinderwagens, wobei mindestens eine kraftbezogene Größe, insbesondere eine Kraft und/oder eine Kraftkomponente, die auf den Schieber einwirkt, und/oder eine aus dieser Kraft bzw. Kraftkomponente abgeleitete Größe, beispielsweise ein Drehmoment und/oder eine zeitliche Änderung der Kraft bzw. Kraftkomponente, erfasst wird, wobei eine Kalibrierung der Kraft-Sensoreinrichtung (in Bezug auf die kraftbezogene Größe) in Abhängigkeit eines Ergebnisses mindestens einer Erfassung der kraftbezogenen Größe, insbesondere in Abhängigkeit des Ergebnisses einer Vielzahl von vorzugsweise mindestens 3, insbesondere (vorzugsweise unmittelbar) aufeinanderfolgenden, Erfassungen der kraftbezogenen Größe initiiert wird. Weitere Verfahrensschritte, die entsprechend durchgeführt werden können, lassen sich aus den obigen und nachfolgenden Ausführungen sowie den beiliegenden Ansprüchen zum Kinderwagengestell bzw. Kinderwagen ableiten. Dort angegebene Konfigurationen bzw. Funktionalitäten können als konkrete Verfahrensschritte realisiert sein.

Die Kraft-Sensoreinrichtung kann (zumindest teilweise) unmittelbar am und/oder im Schieber angeordnet sein (beispielsweise einem horizontal verlaufenden und/oder oberen Schieberabschnitt). Alternativ oder zusätzlich kann die Kraft-Sensoreinrichtung an einem Verbindungsabschnitt der Schiebereinheit mit einem Rahmen des Kinderwagengestells angeordnet sein. Dabei kann die Kraft-Sensoreinrichtung dazu ausgebildet sein, eine Kraft zu messen, die von dem Schieber (bzw. einem Schieberabschnitt) auf den Rahmen wirkt.

Die Antriebseinheit kann auf unterschiedliche Art und Weise ausgestaltet sein. Beispielsweise kann die Antriebseinheit einen Elektromotor und eine Bremse umfassen, wobei beim Schalten der Antriebseinheit in den Nichtantriebszustand die Bremseinheit bzw. die Bremse durch eine (die) Steuereinheit geschaltet wird. In einer weiteren Ausführungsform ist es jedoch auch denkbar, dass, wenn die Antriebseinheit einen Elektromotor umfasst, der Elektromotor als Generator geschaltet wird und/oder als eine Rekuperationsbremse eingesetzt wird, wobei die Rekuperationsbremse dazu ausgebildet ist, elektrische Energie an einen Akkumulator abzugeben. Dies hat den Vorteil, dass zusätzlich zu dem Motor ggf. keine weitere Bremse bzw. kein weiterer Bremsvorgang notwendig ist.

In einer Ausführungsform kann das Kinderwagengestell mindestens drei Räder umfassen, wobei die Antriebseinheit derart angeordnet und ausgebildet sein kann, mindestens eines der Räder anzutreiben und/oder zu blockieren.

Das Kinderwagengestell kann unterschiedlich ausgestaltet sein. Dabei können Dreirad-, aber auch Vierrad-Konfigurationen vorgesehen sein.

In einer Ausführungsform kann das Kinderwagengestell einen Rahmen umfassen, an dem der Schieberabschnitt und/oder mindestens drei Räder angeordnet, insbesondere befestigt, sein können.

In einer Ausführungsform kann der Schieberabschnitt mit dem Rahmen über ein Verbindungselement und/oder einen Verbindungsabschnitt verbindbar ausgebildet sein, wobei die Kraft-Sensoreinrichtung zumindest abschnittsweise an dem Verbindungselement oder dem Verbindungsabschnitt angeordnet sein kann.

Es ist möglich, das Interagieren eines Benutzers mit dem Schieberabschnitt indirekt über eine Kraft zwischen Schieberabschnitt und Rahmen zu detektieren.

In einer Ausführungsform kann der Rahmen mindestens einen Gelenkabschnitt umfassen, wobei der Schieberabschnitt um den Gelenkabschnitt herum rotierbar ausgebildet sein kann.

Um das Kinderwagengestell zusammenzuklappen und so ein kompaktes Tragemaß zu erhalten, kann der Schieberabschnitt einklappbar ausgebildet ein. Dazu kann der Schieberabschnitt um den Gelenkabschnitt herum rotiert werden.

In einer Ausführungsform kann die Kraft-Sensoreinrichtung in dem Gelenkabschnitt angeordnet sein.

Es ist also denkbar, dass eine Interaktion eines Benutzers mit dem Kinderwagengestell indirekt über ein Drehmoment, welches in dem Gelenkabschnitt gemessen wird, detektiert werden kann. Damit wird eine weitere Möglichkeit gegeben, wie die Interaktion festgestellt werden kann. Die Anordnung der Kraft-Sensoreinrichtung in dem Gelenkabschnitt hat den Vorteil, dass dadurch ein kompaktes Baumaß und eine sichere und vor äußeren Einflüssen geschützte Anordnung gewählt werden kann. Darüber hinaus ist damit eine aufwändige Verkabelung des Schieberabschnitts unnötig.

Die mindestens eine (Kraft-)Sensoreinrichtung kann an und/oder in dem Schieber, insbesondere einem Handgriff des Schiebers, angeordnet sein und/oder in und/oder nahe an dem Schieberbefestigungsbereich angeordnet sein. Unter einem Schieberbefestigungsbereich ist insbesondere ein Bereich zu verstehen, an dem der Schieber an einem Hauptkörper des Kinderwagengestells angebracht ist. Unter einer Anordnung nahe zu dem Schieberbefestigungsbereich ist insbesondere eine Anordnung in einem Abstand von weniger als 10 cm, vorzugsweise weniger als 5 cm gegenüber dem Schieber zu verstehen (wobei bei einem sich relativ bewegenden Schieber hier insbesondere der Minimalabstand gemeint ist).

In einer Ausführungsform kann der Rahmen von einer ausgeklappten in eine eingeklappte Konfiguration klappbar ausgebildet sein, insbesondere unter Verwendung des Gelenkabschnittes.

In einer Ausführungsform kann in einer/der ausgeklappten Konfiguration des Rahmens, die Kraft-Sensoreinrichtung kommunikativ und/oder elektrisch mit der Antriebseinheit und/oder der Steuereinheit verbunden sein und/oder in einer/der eingeklappten Konfiguration des Rahmens kann die Kraft-Sensoreinrichtung nicht kommunikativ und/oder elektrisch mit der Antriebseinheit und/oder Steuereinheit verbunden sein.

Die ausgeklappte Konfiguration kann in einer Ausführungsform eine vollständig ausgeklappte Konfiguration oder eine teilweise ausgeklappte Konfiguration sein. Die eingeklappte Konfiguration kann in einer Ausführungsform eine vollständig eingeklappte Konfiguration oder eine teilweise eingeklappte Konfiguration sein.

Die Antriebseinrichtung kann durch ein Einklappen des Kinderwagengestells bzw. des Rahmens auf einfache Art und Weise deaktiviert werden.

Der Schieber ist vorzugsweise einstückig (ggf. mit gegeneinander bewegbaren Einzelteilen) ausgebildet. Der Schieber kann insbesondere einen horizontalen Handgriff aufweisen. Alternativ kann der Schieber auch mehrstückig (z. B. zweistückig), beispielsweise mit mehreren voneinander getrennten Handgriffen, ausgebildet sein.

Die Kraft-Sensoreinrichtung ist vorzugsweise konfiguriert, eine Vielzahl verschiedener Werte zu erfassen, beispielsweise mindestens 10 verschiedene Werte (> 0), vorzugsweise mindestens 100 verschiedene Werte (> 0).

Vorzugsweise umfasst der Kinderwagen bzw. das Kinderwagengestell eine (vorzugsweise wiederaufladbare) Batterie, vorzugsweise umfassend mindestens 2 oder mindestens 4 oder mindestens 10 Batteriezellen.

Die Steuereinheit kann mindestens einen (Mikro-)Prozessor und/oder mindestens einen (Mikro-)Controller und/oder mindestens einen (elektronischen) Chip aufweisen.

Weitere Ausführungsformen ergeben sich aus den Unteransprüchen.

Nachfolgend wird die Erfindung anhand von Ausführungsbeispielen beschrieben, die anhand der Abbildungen näher erläutert werden. Hierbei zeigen:
- Fig. 1: eine schematische Darstellung eines Kinderwagens in Schrägansicht;
- Fig. 2: eine schematische Darstellung des Kinderwagengestells gemäß Fig. 1 unter Hervorhebung unterschiedlicher Anordnungsmöglichkeiten von Kraft-Sensoreinrichtungen;
- Fig. 3: ein Ablaufdiagramm zur Darstellung eines Ablaufs einer Initiierung und Durchführung einer Kalibrierung.

Im Nachfolgenden werden für gleiche sowie gleichwirkende Teile dieselben Bezugsziffern verwendet.

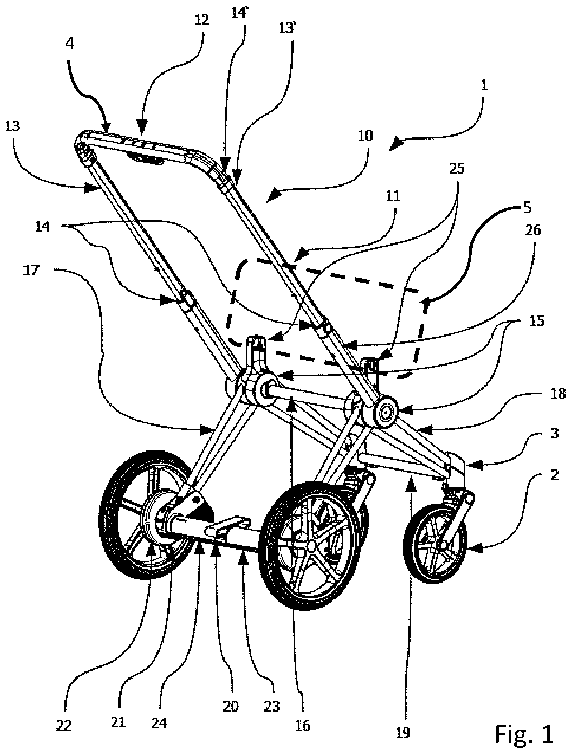

Fig. 1 zeigt einen Kinderwagen 1, der vier Räder 2 aufweist. Zwei Vorderräder 2 sind jeweils über Radbefestigungen 3 mit einer Vorderradaufhängung 18 mit dem Kinderwagen 1 verbunden. Im vorderen Bereich des Kinderwagens 1 ist zwischen den Radbefestigungen 3 eine Vorderradstrebe 19 angeordnet, um die Räder 2 am Kinderwagen 1 zu stabilisieren. Mittels eines Schiebers 4, kann der Kinderwagen 1 geschoben (bzw. gezogen) werden. Eine Kinderaufnahmeeinrichtung 5 (z. B. Sitz- und/oder Liegeaufsatz, wie insbesondere eine Sitzschale, eine Sitzeinheit oder eine Liegewanne), in der eine Kind aufgenommen werden kann, ist nur rein schematisch gezeigt.

Die Radbefestigungen 3 der Vorderräder 2 sind über eine Vorderradaufhängung 18 mit einer Verstelleinrichtung 15 verbunden. Die Verstelleinrichtung 15 ist nach hinten versetzt oberhalb der Vorderräder 2 angeordnet. An der Verstelleinrichtung 15 ist ebenfalls eine Hinterradaufhängung 17 angeordnet, an der an einer Hinterradachse 24 zwei Hinterräder angeordnet sind. Zumindest ungefähr mittig an der Hinterradachse ist eine Feststellbremse 20 angeordnet, die durch einen Fuß betätigbar ausgebildet ist. Die Feststellbremse 20 ist dazu ausgebildet, die Hinterräder festzustellen. Diese können dann nur durch das Lösen der Feststellbremse 20 wieder in Bewegung gebracht werden.

An den Enden der Hinterradachse 24 sind in dem gezeigten Ausführungsbeispiel zwei Elektromotoren 21 zum Antreiben der Hinterräder angeordnet. In weiteren Ausführungsbeispielen ist es jedoch auch denkbar, dass ein einziger Motor beide Räder über eine Welle und/oder ein Getriebe antreibt.

In dem gezeigten Ausführungsbeispiel der Fig. 1 ist die Hinterradachse 24 als Hohlzylinder ausgebildet, wobei in der Hinterradachse 24 ein Akkumulator 23 angeordnet ist, der elektrisch mit den Elektromotoren 21 verbunden ist. Alternativ kann die Hinterradachse 24 auch als Strebe und der Akkumulator 23, ggf. teilweise, darunterliegend ausgebildet sein. Darüber hinaus kann in oder an der Hinterradachse 24 eine Steuerelektronik angeordnet sein, die dazu ausgebildet ist, die Funktionen der Motoren 21 zu steuern.

An der Verstelleinrichtung 15 sind ferner Halteeinrichtungen 25 angeordnet, die dazu ausgebildet sind, die Kinderaufnahmeeinrichtung 5 aufzunehmen.

Die Verstelleinrichtungen 15 sind über eine Querstrebe 16 miteinander verbunden, um die Stabilität der Gesamtvorrichtung sicherzustellen. Darüber hinaus sind an den Verstelleinrichtungen 15 schräg nach oben und hinten verlaufenden Schieberaufnahmeeinrichtungen 26 angeordnet, die über Verbindungselemente 14 mit einer Schiebervorrichtung verbunden sind. Die Schiebervorrichtung besteht aus zwei Seitenstreben 13, 13', die verschiebbar in der Schieberaufnahmevorrichtung 26 angeordnet sind. Die Seitenstreben 13, 13' können über die Verbindungselemente 14 festgestellt werden. Am Ende der Seitenstreben 13, 13' ist ein (horizontaler) Schieberabschnitt 12 angeordnet, an den ein Benutzer zum Schieben des Kinderwagens 1 greifen kann.

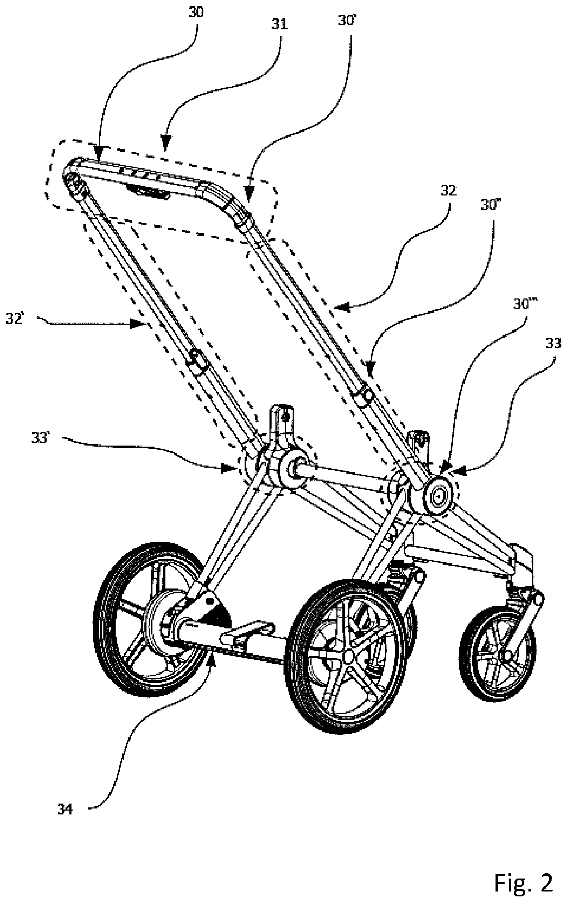

Die Fig. 2 zeigt unterschiedliche Möglichkeiten, Kraft-Sensoreinrichtungen 30, 30', 30", 30‴ an dem Kinderwagen 1 anzuordnen. So zeigt die Fig. 2 einen ersten Sensorbereich 31, der in dem gezeigten Ausführungsbeispiel den Schieberabschnitt des Kinderwagens 1 umfasst. In dem ersten Sensorbereich 31 können Kraftsensoren 30, 30' angeordnet sein. Bei dem Kraftsensor 30 kann es sich um einen Sensor handeln, der dazu ausgebildet ist, eine Kraft zu messen. Der Kraftsensor 30 gibt also ein Signal ab, das in eine Kraft umrechenbar ist.

Der Kraftsensor 30 ist in dem gezeigten Ausführungsbeispiel derart in dem Schieberabschnitt des Kinderwagens 1 im ersten Sensorbereich 31 angeordnet, dass eine Interaktion mit einem Verwender des Kinderwagens 1 detektiert werden kann. Dabei ist in einem Ausführungsbeispiel der Kraftsensor 30 in den Schieberabschnitt 12 eingelassen, wobei eine Kontaktfläche des Kraftsensors 30 in Richtung des Bedieners des Kinderwagens 1 zeigend ausgerichtet ist.

Neben einer Befestigung einer Kraft-Sensoreinrichtung 30 im Schieberabschnitt ist es auch möglich, in einem weiteren Ausführungsbeispiel Kraftsensoren 30' in einem zweiten Sensorbereich 32 in einem Verbindungsbereich des Schieberabschnitts 12 mit Seitenstreben 13, 13' des Kinderwagens 1 anzuordnen. Der Schieberabschnitt 12 kann dabei verschiebbar in den Seitenstreben 13, 13' angeordnet und über ein Befestigungselement bzw. Verbindungselement 14' fixiert sein. Zur Messung von durch einen Verwender aufgebrachten Kräften auf den Schieberabschnitt 12 kann eine Kraft-Sensoreinrichtung, z.B. ein Kraftsensor 30' in dem Verbindungselement 14' angeordnet sein. Ein Kraftsensor 30, 30' kann auch länglich ausgebildet sein und dadurch sowohl einen Bereich des Schieberabschnitts 12 als auch des Verbindungsbereichs abdecken.

Die Fig. 2 zeigt ebenfalls überlagert ein zweites Ausführungsbeispiel, bei dem eine Kraft-Sensoreinrichtung 30" in einem Verbindungselement der Seitenstreben 13, 13' angeordnet ist.

In einem weiteren Ausführungsbeispiel ist eine Kraft-Sensoreinrichtung 30‴ in einem dritten Sensorbereich 33 bzw. 33' an der Verstelleinrichtung 15 angeordnet. Vorzugsweise handelt es sich dabei um einen Drehmomentsensor 30‴. Der Drehmomentsensor 30‴ ist dazu ausgebildet, ein Drehmoment zu messen, welches eine vom Verwender auf den Schieberabschnitt 12 oder die Seitenstreben 13, 13' ausgeübte Kraft hervorruft.

In der Hinterradachse 24 ist eine Steuereinheit 34 angeordnet, die kommunikativ mit den Kraft-Sensoreinrichtungen 30, 30', 30", 30‴ verbunden ist. Die Steuereinheit 34 ist dazu ausgebildet, von den Kraft-Sensoreinrichtungen 30, 30', 30" und/oder 30‴ generierte Sensordaten zu empfangen und zu verarbeiten.

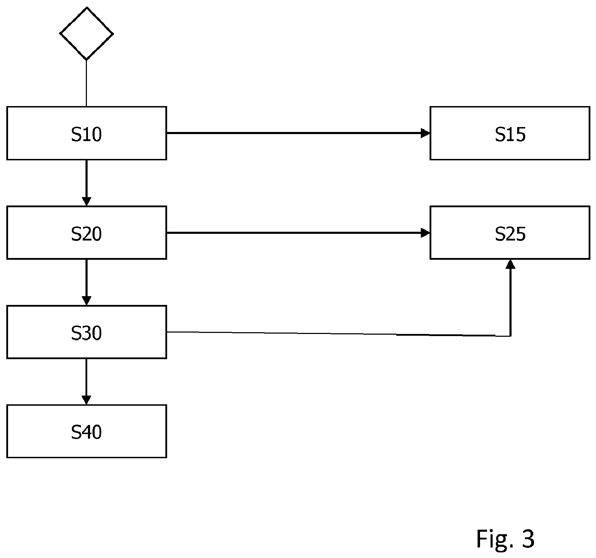

Fig. 3 zeigt ein Ablaufdiagramm für die Initiierung und Durchführung einer Kalibrierung der Kraft-Sensoreinrichtung.

Nach dem Einschalten des Motors (durch den Anwender) überprüft die Steuereinheit zunächst in einem Schritt S10, ob auf die Kraft-Sensoreinrichtung eine Kraft, deren Betrag größer als ein Grenzwert ist, beispielsweise 10 N bis 100 N, vorzugsweise 20 N bis 50 N, weiter vorzugsweise (zumindest ungefähr) 30 N, einwirkt. Sollte dies der Fall sein, wird in einem Schritt S15 eine Fehlermeldung ausgegeben. Hier erfolgt dann keine Kalibrierung und ggf. auch keine Motorunterstützung.

Falls der Betrag der Kraft kleiner als der Grenzwert ist, so wird in einem Schritt S20 überprüft, ob sich mindestens ein Rad des Kinderwagens 1 bzw. Kinderwagengestells 10 dreht. Ist dies der Fall, so wird ein vorläufiger Betrieb des Kinderwagens mit dem zuletzt gespeicherten Kalibrierwert durchgeführt (Schritt S25). Dreht sich das mindestens eine Rad nicht, so wird im nächsten Schritt S30 durch die Steuereinheit überprüft, ob alle Werte einer Vielzahl von beispielsweise 3 bis 10, vorzugsweise 5 bis 20, besonders bevorzugt 10 zuletzt gemessenen Werten (alternativ oder zusätzlich einer Vielzahl von zuletzt gemessenen Werten, die, auf die nächste ganze Zahl gerundet, einem 0,3- bis 10-fachen des Betrags der in Hertz gemessenen Frequenz, weiter vorzugsweise einem 0,5-fachen bis 2-fachen der in Hertz gemessenen Frequenz, entspricht) in einem vorbestimmten Intervall (also einem Intervall vorbestimmter Breite bzw. Größe) liegen, und/oder ob eine statistische Kennaröße zur gemessenen Vielzahl von Werten, beispielsweise die Varianz oder ein anderes statistisches Streuunasmaß, nicht über einem vorbestimmten Wert liegt.

Eine Größe (Breite) des Intervalls liegt vorzugsweise zwischen 0,1 N bis 5 N, weiter vorzugsweise mindestens 0,3 N bis 2 N, besonders bevorzugt (zumindest ungefähr) bei 0,6 N. Trifft dies zu, wird eine Kalibrierung im Schritt S40 durchgeführt. Insbesondere kann dabei ein Mittelwert von zuletzt gemessenen Werten gebildet und als (neuer) Nullpunkt verwendet werden, wobei es sich bei dem Mittelwert vorzugsweise um ein arithmetisches Mittel oder ein geometrisches Mittel oder ein harmonisches Mittel oder ein gewichtetes oder getrimmtes Mittel oder einen anderen geeigneten Mittelwert handeln kann. Ist dies nicht der Fall, so wird ein vorläufiger Betrieb des Kinderwagens mit dem zuletzt gespeicherten Kalibrierwert durchgeführt.

Um Speicherressourcen zu schonen, kann der Motor dann mit diesem Wert bis zum Ausschalten betrieben werden. Es kann jedoch auch eine Kalibrierung in vorbestimmten Abständen (z. B. im Abstand von 5 min bis 15 min, vorzugsweise 10 min bis 2 h) und/oder bei Eintreffen vordefinierter Bedingungen (beispielsweise wenn sich die Temperatur um mindestens 3 °C oder mindestens 6 °C oder mindestens 10 °C im Vergleich zur letzten Kalibrierung geändert hat) vorgesehen sein.

Bei einem nächsten Anschalten des Motors kann der (gesamte) Zyklus ggf. wiederholt werden.

### Bezugszeichenliste

- S10: Schritt
- S15: Schritt
- S20: Schritt
- S25: Schritt
- S30: Schritt
- S40: Schritt

- 1: Kinderwagen
- 2: Rad
- 3: Radbefestigung
- 4: Schieber
- 5: Kinderaufnahmeeinrichtung
- 10: Kinderwagengestell
- 11: Rahmen
- 12: Schieberabschnitt
- 13, 13': Seitenstreben
- 14, 14': Verbindungselement
- 15: Verstelleinrichtung
- 16: Querstrebe
- 17: Hinterradaufhängung
- 18: Vorderradaufhängung
- 19: Vorderradstrebe
- 20: Feststellbremse
- 21: Motor
- 22: Bremseinrichtung
- 23: Akkumulator
- 24: Hinterradachse
- 25: Haltevorrichtungen
- 26: Schieberaufnahmevorrichtungen
- 31: erster Sensorbereich
- 32, 32': zweiter Sensorbereich
- 33, 33': dritter Sensorbereich
- 34: Steuereinheit
- 30, 30', 30": Kraftsensor
- 30‴: Drehmomentsensor

## Patentansprüche

1. Kinderwagen (1) oder Kinderwagengestell (10), umfassend mindestens einen Motor (21), insbesondere Elektromotor, zum insbesondere unterstützenden Antreiben des Kinderwagens (1) bzw. Kinderwagengestells (10),
mindestens einen Schieber (4) zum Schieben des Kinderwagens (1) bzw. Kinderwagengestells (10),
mindestens eine Kraft-Sensoreinrichtung (30) zum Erfassen einer kraftbezogenen Größe, insbesondere einer Kraft und/oder einer Kraftkomponente, die auf den Schieber (4) einwirkt, und/oder einer aus dieser Kraft bzw. Kraftkomponente abgeleiteten Größe, beispielsweise eines Drehmomentes und/oder einer zeitlichen Änderung der Kraft bzw. Kraftkomponente, und
**gekennzeichnet durch** mindestens eine Steuereinheit (34), die konfiguriert ist, eine Kalibrierung der Kraft-Sensoreinrichtung in Abhängigkeit eines Ergebnisses mindestens einer Erfassung der kraftbezogenen Größe, insbesondere in Abhängigkeit des Ergebnisses einer Vielzahl, von vorzugsweise mindestens 3, insbesondere aufeinanderfolgenden, Erfassungen der kraftbezogenen Größe dann zu initiieren, wenn eine Vielzahl von Erfassungen der kraftbezogenen Größe innerhalb eines Werte-Intervalls einer vorbestimmten Breite, von mindestens 0,1 N, weiter vorzugsweise mindestens 0,3 N, und bis höchstens 10 N, vorzugsweise höchstens 2 N, für die kraftbezogene Größe liegen und/oder wenn eine statistische Kenngröße, insbesondere ein statistisches Streumaß, vorzugsweise eine Varianz, der Vielzahl der Erfassungen nicht über einem vorbestimmten Wert für die statistische Kenngröße, von mindestens 0,1 N, weiter vorzugsweise mindestens 0,3 N und von höchstens 10 N, vorzugsweise höchstens 2 N, liegt.

2. Kinderwagen (1) oder Kinderwagengestell (10) nach Anspruch 1,
**dadurch gekennzeichnet, dass**
die Steuereinheit (34) konfiguriert ist, eine Kalibrierung der Kraft-Sensoreinrichtung dann zu initiieren, wenn das Ergebnis indiziert, dass kein Schieben durch eine Person erfolgt.

3. Kinderwagen (1) oder Kinderwagengestell (10) nach einem der vorhergehenden Ansprüche,
**dadurch gekennzeichnet, dass**
die Steuereinheit (34) konfiguriert ist, eine Kalibrierung der Kraft-Sensoreinrichtung dann zu initiieren, wenn eine vorbestimmte Geschwindigkeit des Kinderwagengestells (10), insbesondere eine vorbestimmte Drehgeschwindigkeit mindestens eines Rades (2), eingenommen oder unterschritten wird, vorzugsweise dann zu initiieren, wenn mindestens ein Rad (2) in Ruhe ist.

4. Kinderwagen (1) oder Kinderwagengestell (10) nach einem der vorhergehenden Ansprüche,
**dadurch gekennzeichnet, dass**
die Steuereinheit (34) konfiguriert ist, eine Kalibrierung der Kraft-Sensoreinrichtungdann zu initiieren, wenn ein erfasster Wert der kraftbezogenen Größe auf oder unterhalb eines vorbestimmten Wertes liegt, wobei der vorbestimmte Wert vorzugsweise mindestens 1 N, ggf. mindestens 5 N beträgt.

5. Kinderwagen (1) oder Kinderwagengestell (10) nach einem der vorhergehenden Ansprüche,
**dadurch gekennzeichnet, dass**
die Steuereinheit (34) konfiguriert ist, eine Motorunterstützung zu unterbinden oder zu stoppen, und/oder eine Fehleranzeige zu veranlassen, wenn ein erfasster Wert der kraftbezogenen Größe auf oder oberhalb eines vorbestimmen Wertes liegt, wobei der vorbestimmte Wert vorzugsweise mindestens 10 N, weiter vorzugsweise mindestens 20 N und/oder höchstens 100 N, vorzugsweise höchstens 50 N, beträgt.

6. Kinderwagen (1) oder Kinderwagengestell (10) nach einem der vorhergehenden Ansprüche,
**dadurch gekennzeichnet, dass**
die Kraft-Sensoreinrichtung (30) und/oder die Steuereinheit (34) konfiguriert ist/sind, eine Erfassung der kraftbezogenen Größe, zumindest bis zu einer Initiierung der Kalibrierung, in einer vorbestimmten Frequenz von vorzugsweise mindestens 2 Hz, weiter vorzugsweise mindestens 5 Hz und/oder höchsten 100 Hz, vorzugsweise höchstens 30 Hz, durchzuführen.

7. Kinderwagen (1) oder Kinderwagengestell (10) nach einem der vorhergehenden Ansprüche,
**dadurch gekennzeichnet, dass**
die Vielzahl der Erfassungen mindestens 5, vorzugsweise mindestens 8 und/oder höchstens 500, vorzugsweise höchstens 100 beträgt und/oder die Vielzahl der Erfassungen mindestens 0,3-mal, vorzugsweise mindestens 0,5-mal und/oder höchstens 50-mal, vorzugsweise höchstens 10-mal, weiter vorzugsweise höchstens 2-mal so groß ist, wie eine/die Frequenz der Erfassung der kraftbezogenen Größe in Hz.

8. Kinderwagen (1) oder Kinderwagengestell (10) nach einem der vorhergehenden Ansprüche,
**dadurch gekennzeichnet, dass**
die Steuereinheit (34) dazu ausgebildet ist, die Kalibrierung durchzuführen, vorzugsweise einen neuen Referenzpunkt, insbesondere Nullpunkt, für die kraftbezogene Größe zu bestimmen, insbesondere in Abhängigkeit von dem/den für die Initiierung berücksichtigten Wert/en der kraftbezogenen Größe, wobei besonders bevorzugt ein Mittelwert einer Vielzahl von für die Initiierung berücksichtigten Werten der kraftbezogenen Größe als neuer Referenzpunkt festgelegt wird.

9. Kinderwagen (1) oder Kinderwagengestell (10) nach einem der vorhergehenden Ansprüche,
**dadurch gekennzeichnet, dass**
die Steuereinheit (34) dazu ausgebildet ist, den Motor bis zu einer neuen Kalibrierung auf Grundlage einer gespeicherten Kalibrierung anzusteuern.

10. Kinderwagen (1) oder Kinderwagengestell (10) nach einem der vorhergehenden Ansprüche,
**dadurch gekennzeichnet, dass**
die Steuereinheit (34) dazu ausgebildet ist, insbesondere nach Inbetriebnahme des Motors und ggf. anschließender erstmaliger Kalibrierung, in vorbestimmten Abständen, von vorzugsweise mindestens 5 Minuten und/oder höchstens 12 Stunden, zu überprüfen, ob eine Initiierung der Kalibrierung möglich ist, und vorzugsweise eine solche Kalibrierung auch veranlasst, wenn diese der Fall ist, oder dazu ausgebildet ist, nach erfolgter Initiierung der Kalibrierung bis zu einem Abschalten des Motors keine weitere Kalibrierung mehr zu initiieren.

11. Kinderwagen (1) oder Kinderwagengestell (10) nach einem der vorhergehenden Ansprüche,
**dadurch gekennzeichnet, dass**
die Steuereinheit (34) dazu ausgebildet ist, insbesondere nach Inbetriebnahme des Motors (21) und ggf. anschließender erstmaliger Kalibrierung, zu überprüfen, ob eine Initiierung der Kalibrierung möglich ist, wenn eine vorbestimmte, insbesondere von außen vorgegebene, Bedingung, wie beispielsweise eine Temperaturänderung gegenüber einer Temperatur zum Zeitpunkt einer letztmaligen Kalibrierung vorliegt, und vorzugsweise eine solche Kalibrierung auch veranlasst, wenn dies der Fall ist.

12. Computerlesbares Speichermedium, welches Instruktionen enthält, die mindestens einen Prozessor dazu veranlassen, ein Verfahren zum Steuern eines Kinderwagens (1) bzw. Kinderwagengestells (10) nach einem der Ansprüche 1 bis 11 zu implementieren, wenn die Instruktionen durch einen Prozessor ausgeführt werden, wobei bei dem Verfahren mindestens eine kraftbezogenen Größe, insbesondere eine Kraft und/oder eine Kraftkomponente, die auf den Schieber einwirkt, und/oder eine aus dieser Kraft bzw. Kraftkomponente abgeleitete Größe, beispielsweise ein Drehmoment und/oder eine zeitliche Änderung der Kraft bzw. Kraftkomponente, erfasst wird, **dadurch gekennzeichnet, dass** eine Kalibrierung der Kraft-Sensoreinrichtung in Abhängigkeit eines Ergebnisses mindestens einer Erfassung der kraftbezogenen Größe, insbesondere in Abhängigkeit des Ergebnisses einer Vielzahl, von vorzugsweise mindestens 3, insbesondere aufeinanderfolgenden, Erfassungen der kraftbezogenen Größe initiiert wird, wenn eine Vielzahl von Erfassungen der kraftbezogenen Größe innerhalb eines Werte-Intervalls einer vorbestimmten Breite, von mindestens 0,1 N, weiter vorzugsweise mindestens 0,3 N und bis höchstens 10 N, vorzugsweise höchstens 2 N, für die kraftbezogene Größe liegen und/oder wenn eine statistische Kenngröße, insbesondere ein statistisches Streumaß, vorzugsweise eine Varianz, der Vielzahl der Erfassungen nicht über einem vorbestimmten Wert für die statistische Kenngröße, von mindestens 0,1 N, weiter vorzugsweise mindestens 0,3 N und von höchstens 10 N, vorzugsweise höchstens 2 N, liegt.

13. Verfahren zum Steuern eines Kinderwagens (1) bzw. Kinderwagengestells (10) nach einem der Ansprüche 1 bis 11, . , wobei mindestens eine kraftbezogenen Größe, insbesondere eine Kraft und/oder eine Kraftkomponente, die auf den Schieber einwirkt, und/oder eine aus dieser Kraft bzw. Kraftkomponente abgeleitete Größe, beispielsweise ein Drehmoment und/oder eine zeitliche Änderung der Kraft bzw. Kraftkomponente, erfasst wird, **dadurch gekennzeichnet, dass** eine Kalibrierung der Kraft-Sensoreinrichtung in Abhängigkeit eines Ergebnisses mindestens einer Erfassung der kraftbezogenen Größe, insbesondere in Abhängigkeit des Ergebnisses einer Vielzahl, von vorzugsweise mindestens 3, insbesondere aufeinanderfolgenden, Erfassungen der kraftbezogenen Größe initiiert wird, wenn eine Vielzahl von Erfassungen der kraftbezogenen Größe innerhalb eines Werte-Intervalls einer vorbestimmten Breite, von mindestens 0,1 N, weiter vorzugsweise mindestens 0,3 N und bis höchstens 10 N, vorzugsweise höchstens 2 N, für die kraftbezogene Größe liegen und/oder wenn eine statistische Kenngröße, insbesondere ein statistisches Streumaß, vorzugsweise eine Varianz, der Vielzahl der Erfassungen nicht über einem vorbestimmten Wert für die statistische Kenngröße, von mindestens 0,1 N, weiter vorzugsweise mindestens 0,3 N und von höchstens 10 N, vorzugsweise höchstens 2 N, liegt.

## Claims

1. Stroller (1) or stroller frame (10), comprising
at least one motor (21), in particular an electric motor, for in particular assisted driving the stroller (1) or stroller frame (10),
at least one pusher (4) for pushing the stroller (1) or stroller frame (10),
at least one force sensor device (30) for detecting a force-related variable, in particular a force and/or a force component which acts on the pusher (4), and/or a variable derived from this force or force component, for example a torque and/or a change over time of the force or force component, and
**characterized by** at least one control unit (34) configured to initiate a calibration of the force sensor device depending on a result of at least one detection of the force-related variable, in particular depending on the result of a plurality, of preferably at least 3, in particular successive, detections of the force-related variable if a plurality of detections of the force-related variable are within a value interval of a predetermined width, of preferably at least 0.1 N, further preferably at least 0.3 N and/or at most 10 N, preferably at most 2 N, for the force-related variable and/or if a statistical parameter, in particular a statistical spread, preferably a variance, of the plurality of detections is not above a predetermined value for the statistical parameter, of preferably at least 0.1 N, further preferably at least 0.3 N and/or at most 10 N, preferably at most 2 N.

2. Stroller (1) or stroller frame (10) according to claim 1,
**characterized in that**
the control unit (34) is configured to initiate a calibration of the force sensor device when the result indicates that there is no pushing by a person.

3. Stroller (1) or stroller frame (10) according to one of the preceding claims,
**characterized in that**
the control unit (34) is configured to initiate a calibration of the force sensor device when a predetermined speed of the stroller frame (10), in particular a predetermined rotational speed of at least one wheel (2), is assumed or undershot, preferably to initiate when at least one wheel (2) is at rest.

4. Stroller (1) or stroller frame (10) according to one of the preceding claims,
**characterized in that**
the control unit (34) is configured to initiate a calibration of the force sensor device when a detected value of the force-related variable is at or below a predetermined value, wherein the predetermined value is preferably at least 1 N, optionally at least 5 N.

5. Stroller (1) or stroller frame (10) according to one of the preceding claims,
**characterized in that**
the control unit (34) is configured to inhibit or stop motor assistance, and/or to cause an error indication when a detected value of the force-related variable is at or above a predetermined value, wherein the predetermined value is preferably at least 10 N, further preferably at least 20 N, and/or at most 100 N, preferably at most 50 N.

6. Stroller (1) or stroller frame (10) according to one of the preceding claims,
**characterized in that**
the force sensor device (30) and/or the control unit (34) is/are configured to perform a detection of the force-related variable, at least until an initiation of the calibration, in a predetermined frequency of preferably at least 2 Hz, further preferably at least 5 Hz and/or at most 100 Hz, preferably at most 30 Hz.

7. Stroller (1) or stroller frame (10) according to one of the preceding claims,
**characterized in that**
the plurality of detections is at least 5, preferably at least 8 and/or at most 500, preferably at most 100 and/or
the plurality of detections is at least 0.3 times, preferably at least 0.5 times and/or at most 50 times, preferably at most 10 times, further preferably at most 2 times as large as a/the frequency of detection of the force-related variable in Hz.

8. Stroller (1) or stroller frame (10) according to one of the preceding claims,
**characterized in that**
the control unit (34) is designed to perform the calibration, preferably to determine a new reference point, in particular zero point, for the force-related variable, in particular depending on the value(s) of the force-related variable taken into account for the initiation, wherein particularly preferably a mean value of a plurality of values of the force-related variable taken into account for the initiation is defined as the new reference point.

9. Stroller (1) or stroller frame (10) according to one of the preceding claims,
**characterized in that**
the control unit (34) is designed to control the motor based on a stored calibration until a new calibration.

10. Stroller (1) or stroller frame (10) according to one of the preceding claims,
**characterized in that**
the control unit (34) is designed to check, in particular after start-up of the motor and possibly subsequent initial calibration, at predetermined intervals, of preferably at least 5 minutes and/or at most 12 hours, whether an initiation of the calibration is possible, and preferably also initiates such calibration if this is the case, or
is designed, once calibration has been initiated, not to initiate any further calibration until the motor is switched off.

11. Stroller (1) or stroller frame (10) according to one of the preceding claims,
**characterized in that**
the control unit (34) is designed to check, in particular after start-up of the motor (21) and possibly subsequent initial calibration, whether an initiation of the calibration is possible if a predetermined condition, in particular one predetermined externally, such as, for example, a change in temperature compared with a temperature at the time of a last calibration, is present, and preferably also initiates such a calibration if this is the case.

12. Computer-readable storage medium containing instructions which cause at least one processor to implement a method for controlling a stroller (1) or stroller frame (10) according to one of claims 1 to 11, when the instructions are executed by a processor, wherein in the method at least one force-related variable, in particular a force and/or a force component acting on the pusher, and/or a variable derived from this force or force component, in particular a force and/or force component acting on the pusher and/or a variable derived from this force or force component, for example a torque and/or a change over time of the force or force component, **characterized in that** a calibration of the force sensor device is initiated depending on a result of at least one detection of the force-related variable, in particular depending on the result of a plurality, preferably at least 3, in particular successive, detections of the force-related variable, if a plurality of detections of the force-related variable are within a value interval of a predetermined width, of preferably at least 0.1 N, further preferably at least 0.3 N and/or at most 10 N, preferably at most 2 N, for the force-related variable and/or if a statistical parameter, in particular a statistical spread, preferably a variance, of the plurality of detections is not above a predetermined value for the statistical parameter, of preferably at least 0.1 N, further preferably at least 0.3 N and/or at most 10 N, preferably at most 2 N.

13. Method for controlling a stroller (1) or stroller frame (10) according to one of claims 1 to 11, wherein at least one force-related variable, in particular a force and/or a force component acting on the pusher, and/or a variable derived from this force or force component, in particular a force and/or force component acting on the pusher and/or a variable derived from this force or force component, for example a torque and/or a change over time of the force or force component, **characterized in that** a calibration of the force sensor device is initiated depending on a result of at least one detection of the force-related variable, in particular depending on the result of a plurality, preferably at least 3, in particular successive, detections of the force-related variable, if a plurality of detections of the force-related variable are within a value interval of a predetermined width, of preferably at least 0.1 N, further preferably at least 0.3 N and/or at most 10 N, preferably at most 2 N, for the force-related variable and/or if a statistical parameter, in particular a statistical spread, preferably a variance, of the plurality of detections is not above a predetermined value for the statistical parameter, of preferably at least 0.1 N, further preferably at least 0.3 N and/or at most 10 N, preferably at most 2 N.

## Revendications

1. Poussette (1) ou cadre de poussette (10), comprenant
au moins un moteur (21), en particulier un moteur électrique, en particulier pour une conduite assistée de la poussette (1) respectivement du cadre de poussette (10),
au moins une barre de poussée (4) pour pousser la poussette (1) respectivement le cadre de poussette (10),
au moins un dispositif de capteur de force (30) pour détecter une variable liée à la force, en particulier une force et/ou une composante de force agissant sur la barre de poussée (4), et/ou une variable dérivée de cette force ou composante de force, par exemple un couple et/ou un changement au cours du temps de la force ou composante de force, et
caractérisé/e par au moins une unité de commande (34) qui est configurée pour initier un étalonnage du dispositif de capteur de force en fonction du résultat d'au moins une détection de la variable liée à la force, en particulier en fonction du résultat d'une pluralité, de préférence d'au moins trois, détections en particulier séquentielles de la variable liée à la force lorsqu'une pluralité de détections de la variable liée à la force se situe au sein d'un intervalle de valeurs d'une largeur prédéterminée, au moins de 0,1 N, plus préférablement au moins de 0,3 N et jusqu'au plus de 10 N, de préférence au plus de 2 N, pour la variable liée à la force, et/ou lorsqu'une caractéristique statistique, en particulier une mesure statistique de dispersion, de préférence une variance, de la pluralité de détections ne se situe pas au-dessus d'une valeur prédéterminée pour la caractéristique statistique, au moins de 0,1 N, plus préférablement au moins de 0,3 N et au plus de 10 N, de préférence au plus de 2 N.

2. Poussette (1) ou cadre de poussette (10) selon la revendication 1,
caractérisé/e en ce que
l'unité de commande (34) est configurée pour initier un étalonnage du dispositif de capteur de force lorsque le résultat indique qu'aucune poussée par une personne n'est effectuée.

3. Poussette (1) ou cadre de poussette (10) selon l'une des revendications précédentes,
caractérisé/e en ce que
l'unité de commande (34) est configurée pour initier de préférence un étalonnage du dispositif de capteur de force lorsqu'une vitesse prédéterminée du cadre de poussette (10), en particulier une vitesse de rotation prédéterminée d'au moins une roue (2), est atteinte ou n'est pas atteinte lorsqu'au moins une roue (2) est au repos.

4. Poussette (1) ou cadre de poussette (10) selon l'une des revendications précédentes,
caractérisé/e en ce que
l'unité de commande (34) est configurée pour initier un étalonnage du dispositif de capteur de force lorsqu'une valeur détectée de la variable liée à la force est égale ou inférieure à une valeur prédéterminée, la valeur prédéterminée s'élevant de préférence à au moins 1 N, éventuellement à au moins 5 N.

5. Poussette (1) ou cadre de poussette (10) selon l'une des revendications précédentes,
caractérisé/e en ce que
l'unité de commande (34) est configurée pour empêcher ou arrêter une assistance de moteur et/ou pour déclencher une indication d'erreur lorsqu'une valeur détectée de la variable liée à la force est égale ou supérieure à une valeur prédéterminée, la valeur prédéterminée s'élevant de préférence à au moins 10 N, plus préférablement à au moins 20 N et/ou au plus à 100 N, de préférence au plus à 50 N.

6. Poussette (1) ou cadre de poussette (10) selon l'une des revendications précédentes,
caractérisé/e en ce que
le dispositif de capteur de force (30) et/ou l'unité de commande (34) est/sont configuré/es pour réaliser une détection de la variable liée à la force, au moins jusqu'à une initiation de l'étalonnage, à une fréquence prédéterminée de préférence au moins de 2 Hz, plus préférablement au moins de 5 Hz et/ou au plus de 100 Hz, de préférence au plus de 30 Hz.

7. Poussette (1) ou cadre de poussette (10) selon l'une des revendications précédentes,
caractérisé/e en ce que
la pluralité de détections s'élève au moins à 5, de préférence au moins à 8 et/ou au plus à 500, de préférence au plus à 100 et/ou la pluralité de détections est au moins de 0,3 fois, de préférence au moins de 0,5 fois et/ou au plus de 50 fois, de préférence au plus de 10 fois, plus préférablement au plus de 2 fois plus grande qu'une/ que la fréquence de la détection de la variable liée à la force en Hz.

8. Poussette (1) ou cadre de poussette (10) selon l'une des revendications précédentes,
caractérisé/e en ce que
l'unité de commande (34) est conçue pour réaliser l'étalonnage, de préférence pour déterminer un nouveau point de référence, en particulier un point zéro, pour la variable liée à la force, en particulier en fonction de la/des valeur/s de la variable liée à la force prise/s en compte pour l'initiation, dans laquelle de manière particulièrement préférée une valeur moyenne d'une pluralité de valeurs de la variable liée à la force prises en compte pour l'initiation est définie comme nouveau point de référence.

9. Poussette (1) ou cadre de poussette (10) selon l'une des revendications précédentes,
caractérisé/e en ce que
l'unité de commande (34) est conçue pour commander le moteur jusqu'à un nouvel étalonnage sur la base d'un étalonnage enregistré.

10. Poussette (1) ou cadre de poussette (10) selon l'une des revendications précédentes,
caractérisé/e en ce que
l'unité de commande (34) est conçue pour vérifier, en particulier après la mise en service du moteur et éventuellement après un étalonnage initial ultérieur, à des intervalles prédéterminés, de préférence au moins de 5 minutes et/ou au plus de 12 heures, si une initiation de l'étalonnage est possible et déclenche de préférence également un tel étalonnage si tel est le cas, ou est conçue pour ne plus initier aucun autre étalonnage jusqu'à l'arrêt du moteur après la réussite de l'initiation de l'étalonnage.

11. Poussette (1) ou cadre de poussette (10) selon l'une des revendications précédentes,
caractérisé/e en ce que
l'unité de commande (34) est conçue pour vérifier, en particulier après la mise en service du moteur (21) et éventuellement après un étalonnage initial ultérieur, si une initiation de l'étalonnage est possible lorsqu'une condition prédéterminée existe, en particulier prédéfinie de l'extérieur, telle que par exemple une variation de température par rapport à une température au moment du dernier étalonnage, et de préférence déclenche également un tel étalonnage lorsque c'est le cas.

12. Support de stockage lisible par ordinateur contenant des instructions qui amènent au moins un processeur à mettre en œuvre un procédé destiné à commander une poussette (1) respectivement un cadre de poussette (10) selon l'une des revendications 1 à 11 lorsque les instructions sont exécutées par un processeur, dans lequel, selon le procédé, au moins une variable liée à la force, en particulier une force et/ou une composante de force agissant sur la barre de poussée, et/ou une variable dérivée de cette force respectivement composante de force, par exemple un couple et/ou un changement au cours du temps de la force ou composante de force, est détectée, **caractérisé en ce qu'**un étalonnage du dispositif de capteur de force est initié en fonction du résultat d'au moins une détection de la variable liée à la force, en particulier en fonction du résultat d'une pluralité, de préférence d'au moins trois, détections en particulier séquentielles de la variable liée à la force lorsqu'une pluralité de détections de la variable liée à la force se situe au sein d'un intervalle de valeurs d'une largeur prédéterminée, au moins de 0,1 N, plus préférablement au moins de 0,3 N et jusqu'au plus de 10 N, de préférence au plus de 2 N, pour la variable liée à la force, et/ou lorsqu'une caractéristique statistique, en particulier une mesure statistique de dispersion, de préférence une variance, de la pluralité de détections ne se situe pas au-dessus d'une valeur prédéterminée pour la caractéristique statistique, au moins de 0,1 N, plus préférablement au moins de 0,3 N et au plus de 10 N, de préférence au plus de 2 N.

13. Procédé destiné à commander une poussette (1) respectivement un cadre de poussette (10) selon l'une des revendications 1 à 11, dans lequel
au moins une variable liée à la force, en particulier une force et/ou une composante de force agissant sur la barre de poussée, et/ou une variable dérivée de cette force respectivement composante de force, par exemple un couple et/ou un changement au cours du temps de la force ou composante de force, est détectée, **caractérisé en ce qu'**un étalonnage du dispositif de capteur de force est initié en fonction du résultat d'au moins une détection de la variable liée à la force, en particulier en fonction du résultat d'une pluralité, de préférence d'au moins trois, détections en particulier séquentielles de la variable liée à la force lorsqu'une pluralité de détections de la variable liée à la force se situe au sein d'un intervalle de valeurs d'une largeur prédéterminée, au moins de 0,1 N, plus préférablement au moins de 0,3 N et jusqu'au plus de 10 N, de préférence au plus de 2 N, pour la variable liée à la force et/ou lorsqu'une caractéristique statistique, en particulier une mesure statistique de dispersion, de préférence une variance, de la pluralité de détections ne se situe pas au-dessus d'une valeur prédéterminée pour la caractéristique statistique, au moins de 0,1 N, plus préférablement au moins de 0,3 N et au plus de 10 N, de préférence au plus de 2 N.
